# FASCICULE DE BREVET EUROPEEN

(11) **EP 2 608 363 B1**
(45) Date de publication et mention de la délivrance du brevet: **06.08.2014**
(21) Numéro de dépôt: 12192330.4
(22) Date de dépôt: 13.11.2012
(51) Int. Cl.: H02K 3/51

(54) **Flasques de maintien des chignons de bobinages et rotor à pôles saillants comportant lesdites flasques**
Flansche für die Unterstützung der Wickelköpfe und Schenkelpol- Rotor mit den Flanschen
Flanges for the support of winding heads and salient pole rotor comprising said flanges

(30) Priorité: 20.12.2011 FR 1161995
(43) Date de publication de la demande: 26.06.2013
(73) Titulaire: VALEO EQUIPEMENTS ELECTRIQUES MOTEUR, 94046 Créteil (FR)
(72) Inventeur: Serdin, Claire, 94240 L'Hay Les Roses (FR); Boussicot, Frédéric, 94000 Creteil (FR); Lutun, Jérémie, 75012 Paris (FR); Dubus, Jean-Marc, 77380 Combs La Ville (FR)
(74) Mandataire: Ribeil, Alexandre

(56) Documents cités:
- EP-A2- 0 261 306
- EP-A2- 0 444 908
- JP-U- 57 007 872

## Description

### DOMAINE TECHNIQUE DE L'INVENTION

L'invention concerne un rotor à pôles saillants comportant des flasques de maintien des chignons de bobinages ainsi que des flasques de maintien associés.

L'invention trouve une application particulièrement avantageuse dans le domaine des machines électriques tournantes telles que les alternateurs, les alterno-démarreurs et les ralentisseurs électromagnétiques.

### ETAT DE LA TECHNIQUE

Le document WO 2007/003835 présente un rotor à pôles saillants pour une machine électrique tournante notamment un alternateur ou un alterno-démarreur pour véhicule automobile.

Les documents EP 261 306 et EP 444 908 présentent des rotors pour machine électrique avec des flasques de maintien des chignons de bobinages.

On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile.

Cette machine comporte essentiellement un carter et, à l'intérieur de celui-ci, un rotor solidaire en rotation d'un arbre central de rotor et un stator annulaire qui entoure le rotor de manière coaxiale à l'arbre.

Le stator comporte un corps en forme d'un paquet de tôles doté d'encoches, par exemple du type semi-fermé, pour le montage d'un bobinage de stator comportant plusieurs enroulements. Ce bobinage de stator comporte par exemple un jeu d'enroulements triphasé en étoile ou en triangle, dont les sorties sont reliées à un pont redresseur comportant des éléments redresseurs.

D'une manière générale, l'alternateur est du type polyphasé et le ou les ponts redresseurs permettent notamment de redresser le courant alternatif produit dans les enroulements du stator en un courant continu notamment pour charger la batterie du véhicule automobile et alimenter les charges et les consommateurs électriques du réseau de bord du véhicule automobile.

Le carter est en au moins deux parties, à savoir un palier avant et un palier arrière. Les paliers sont de forme creuse et portent chacun centralement un roulement à billes respectivement pour le montage à rotation de l'arbre du rotor.

Le carter comporte une partie intermédiaire portant intérieurement le corps du stator. Cette partie intermédiaire est intercalée axialement entre les paliers dotés chacun d'une pluralité d'ouvertures pour ventilation interne de la machine grâce à au moins un ventilateur solidaire d'une des extrémités axiale du rotor. Ce ventilateur comporte des pales solidaires d'un flasque de manière décrite ci-dessous.

L'arbre du rotor porte à son extrémité avant une poulie qui est agencée à l'extérieur du carter. La poulie appartient à un dispositif de transmission de mouvements par l'intermédiaire d'au moins une courroie entre l'alternateur et le moteur thermique du véhicule automobile.

Un paquet de tôles est monté coaxialement sur l'arbre de rotor dans le carter, à l'intérieur du stator. Ce paquet de tôles est formé d'un empilement axial de tôles qui s'étendent dans un plan radial perpendiculaire à l'axe de l'arbre de rotor. Ce paquet de tôles comporte ici, une âme centrale cylindrique et une répartition circonférentielle de bras saillants radialement à partir de l'âme.

Dans un plan radial, les tôles du paquet de tôles ont toutes un contour identique. Le contour des tôles est découpé de forme globalement circulaire et comportant des pôles saillants, qui sont répartis régulièrement selon une direction radiale et saillants de l'arbre vers la périphérie externe. Le paquet de tôles comporte au moins deux pôles.

Chaque pôle est constitué d'un bras qui, à partir de l'âme, s'étend radialement vers la périphérie extérieure en direction du stator. L'extrémité libre du pôle se termine par un retour saillant circonférentiellement de part et d'autre du bras. Un entrefer annulaire existe entre l'extrémité libre des pôles et la périphérie intérieure du corps du stator.

La fonction du retour saillant de chaque pôle est de retenir dans la direction radiale un bobinage d'excitation électriquement conducteur, qui est enroulé autour du bras radial de chaque pôle, à l'encontre de la force centrifuge subie par le bobinage d'excitation lors de la rotation du rotor.

Les bobinages d'excitation de chaque pôle sont reliés électriquement entre eux par des fils de liaison, par exemple en série. Les bobinages d'excitation sont alimentés électriquement par un collecteur, qui comporte des bagues collectrices, qui sont agencées autour d'une extrémité arrière de l'arbre. Ce collecteur est par exemple réalisé par surmoulage de matière électriquement isolante sur des éléments électriquement conducteurs reliant les bagues à un anneau relié électriquement par des liaisons filaires aux extrémités du ou des bobinages d'excitation du rotor.

Les bagues collectrices sont alimentées électriquement par l'intermédiaire de balais qui appartiennent à un porte-balais et qui sont disposés de façon à frotter sur les bagues collectrices. Le porte-balais est généralement agencé dans le carter et il est relié électriquement à un régulateur de tension.

Chaque bobinage d'excitation est enroulé autour du bras d'orientation radiale de chaque pôle de manière que des portions d'extrémités axiales du bobinage d'excitation font saillie axialement par rapport à chaque face radiale d'extrémité axiale externe du paquet de tôles. Ces portions en saillie seront par la suite appelées "chignons". Chaque pôle comporte ainsi un bobinage d'excitation qui comporte lui-même deux chignons opposés.

Un premier flasque avant et un deuxième flasque arrière sont montés coaxialement à l'arbre de manière à enserrer axialement le paquet de tôles pour maintenir les tôles empilées en paquet. Chaque flasque a globalement la forme d'un disque s'étendant dans un plan radial perpendiculaire à l'axe de l'arbre. Chaque flasque comporte un orifice central pour le montage coaxial sur l'arbre.

Les flasques sont agencés axialement de part et d'autre du paquet de tôles de manière que les faces radiales internes des flasques sont en appui contre les faces radiales d'extrémité axiales externes du paquet de tôles. Chaque flasque comporte quatre trous destinés à permettre le passage de quatre tirants. Les bras du paquet de tôles comportent des trous de manière que les tirants puissent traverser axialement le paquet de tôles depuis le flasque avant jusqu'au flasque arrière. Les flasques sont en matière conductrice de chaleur, par exemple en métal.

Le bord périphérique externe des flasques en vis-à-vis du stator comporte des rainures axiales qui sont débouchantes dans les faces radiales interne et externe des flasques. Ces rainures permettent de renouveler l'air qui est compris radialement entre le stator et le rotor. Chaque flasque comporte aussi des logements qui sont réalisés dans leur face radiale interne. Ces logements sont destinés à recevoir les chignons saillants. Au moins un des logements d'au moins un flasque comporte une surface de contact avec la face radiale externe du chignon associé. Ainsi, lorsque les chignons sont échauffés, leur chaleur est transmise aux flasques notamment par conduction.

Pour éviter que le bobinage d'excitation ne soit abîmé et pour éviter les courts-circuits dans le bobinage d'excitation, le chignon est en contact avec le fond du logement par l'intermédiaire d'une substance conductrice de chaleur et non conductrice d'électricité, qui protège les fils du bobinage d'excitation. La substance est ici un vernis d'imprégnation conducteur de chaleur et isolant électrique. Ce verni durcit par polymérisation.

L'un des flasques comporte des orifices de remplissage qui débouchent chacun dans le fond d'un logement associé. Ces orifices de remplissage sont destinés à permettre l'imprégnation du vernis liquide autour du bobinage d'excitation associé audit logement, et plus particulièrement autour des deux chignons du bobinage d'excitation.

La face radiale externe de chaque flasque comporte des pales formant un ventilateur. Chaque pale s'étend axialement vers l'extérieur depuis la face radiale externe du flasque associé. Lorsque le rotor tourne, les pales permettent ainsi d'évacuer la chaleur emmagasinée notamment dans les flasques et le rotor par circulation d'air à l'intérieur de la machine par l'intermédiaire des ouvertures que présentent les paliers.

Cependant, pour une telle configuration de la machine et en particulier des flasques, la circulation de l'air à l'intérieur du rotor n'est pas optimale lorsque le nombre de pôles augmente. Lorsque le rotor présente un nombre de pôles élevés, ce rotor a tendance à s'échauffer rapidement. En outre, pour faciliter l'évacuation de la chaleur, une telle configuration connue de la machine électrique impose nécessairement de mettre en oeuvre une opération d'imprégnation de vernis qui est longue et coûteuse à réaliser.

### OBJET DE L'INVENTION

L'invention a notamment pour but de proposer un rotor à pôles saillants perfectionné permettant un refroidissement amélioré sans avoir à effectuer nécessairement une étape d'imprégnation de vernis.

A cette fin, l'invention concerne un rotor de machine électrique tournante comportant :
- un arbre de rotor destiné à être monté rotatif autour de son axe,
- un paquet de tôles monté coaxialement sur l'arbre de rotor, ce paquet de tôles comportant au moins deux pôles saillants radialement,
- un bobinage d'excitation enroulé autour de chaque pôle, de manière que des portions d'extrémité axiale du bobinage, dîtes « chignons » font saillie axialement par rapport à chaque face d'extrémité radiale externe du paquet de tôles,
- des flasques de maintien du paquet de tôles et des chignons des bobinages agencés axialement de part et d'autre du paquet de tôles, **caractérisé en ce** que :
   - chaque flasque de maintien comporte :
   - une paroi radiale munie d'une ouverture principale autorisant le passage de l'arbre,
   - un rebord annulaire s'étendant sur toute la périphérie externe de la paroi radiale et s'étendant axialement en direction du rotor, ce rebord annulaire présentant une face en appui sur les faces d'extrémité radiale externe du paquet de tôles afin de maintenir en place les chignons malgré la force centrifuge provoquée par la rotation du rotor s'exerçant sur lesdits chignons,
   - au moins un orifice traversant ménagé dans la paroi radiale assurant une circulation de l'air à l'intérieur du rotor entre les deux pôles saillants et chaque flasque comporte une première série d'orifices traversants situés autour de l'ouverture principale, ces orifices présentant un angle d'ouverture au moins égal à l'angle entre deux pôles saillants successifs.

Chaque flasque présente une deuxième série d'orifices d'orifices traversants implantée à l'extérieur de la première série d'orifices.

Selon une réalisation, la taille de la première série d'orifices et /ou de la deuxième série d'orifices est différente d'un flasque à l'autre.

Selon une réalisation, la première série d'orifices de l'un des flasques est plus large circonférentiellement et plus haute radialement que la première série d'orifices de l'autre flasque.

Selon une réalisation, chaque flasque présente des lamages affectant radialement la périphérie externe de la paroi radiale et axialement en partie le rebord.

Selon une réalisation, l'un au moins des flasques porte des pales de ventilation positionnées sur une première face de la paroi radiale tournée vers l'extérieur du rotor.

Selon une réalisation, les pales de ventilation appartiennent à un ventilateur séparé rapporté à fixation sur le flasque par exemple par soudage par points, vissage ou rivetage.

Selon une réalisation, les pales de ventilation appartiennent au flasque en étant d'un seul tenant avec ce flasque.

Selon une réalisation, chaque orifice de la deuxième série est positionné entre deux pales successives.

Selon une réalisation, le rotor comporte en outre deux éléments isolants positionnés de part et d'autre du paquet de tôles, assurant l'isolation de chignons.

Selon une réalisation,
- la paroi radiale de chaque flasque présente sur sa face interne tournée vers le rotor au moins un secteur s'étendant axialement vers le paquet de tôles,
- chaque élément isolant présente au moins une partie évidée à l'intérieur de laquelle est inséré le secteur d'un des flasques.

Selon une réalisation, chaque élément isolant comporte :
- une paroi radiale,
- des bras s'étendant vers l'extérieur à partir de bord externe de la paroi radiale et maintenus plaqués contre une face d'extrémité radiale d'un pôle saillant par un chignon, et
- des casquettes situées à une extrémité des bras et s'étendant circonférentiellement de part et d'autre du bras, ces casquettes étant positionnées entre la tête du bobinage et le rebord annulaire d'un flasque de manière à participer à la retenue des chignons.

Selon une réalisation, l'un des éléments isolant présente des pions de guidage de fils de liaison entre les bobinages.

Selon une réalisation, les éléments isolants comportent au moins deux dispositifs d'encliquetage destinés à coopérer par encliquetage avec des ouvertures ménagées sur chaque face d'extrémité radiale du paquet de tôles.

Selon une réalisation, chaque flasque comporte au moins un pion de centrage destiné à coopérer avec des ouvertures axiales ménagées dans les pôles saillants.

Selon une réalisation, chaque flasque comporte au moins deux orifices, les orifices des flasques et les ouvertures axiales des pôles assurant le passage de tirants d'assemblage pour assembler les flasques autour du paquet de tôles.

Selon une réalisation, l'extrémité libre d'un pôle se termine par un retour saillant circonférentiellement de part et d'autre d'un bras et le rotor comporte au moins un aimant positionné entre deux retours de deux pôles saillants adjacents.

Selon une réalisation, les flasques sont réalisés en matériau amagnétique, tel que l'aluminium ou de la matière plastique avantageusement renforcée par des fibres.

L'invention concerne en outre un ensemble de flasques de maintien d'un paquet de tôles et de chignons de bobinages agencés axialement de part et d'autre du paquet de tôles d'un rotor de machine électrique tournante, **caractérisé en ce que** chaque flasque de maintien comporte :
- une paroi radiale munie d'une ouverture principale autorisant le passage de l'arbre,
- un rebord annulaire s'étendant sur toute la périphérie externe de la paroi radiale et s'étendant axialement en direction du rotor, ce rebord annulaire présentant une face en appui sur les faces d'extrémité radiale externe du paquet de tôles afin de maintenir en place les chignons malgré la force centrifuge provoquée par la rotation du rotor s'exerçant sur lesdits chignons,
- au moins un orifice traversant ménagé dans la paroi radiale assurant une circulation de l'air à l'intérieur du rotor entre les deux pôles saillants.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention. Elles montrent :
Figure 1 : une vue en coupe axiale d'une machine électrique tournante munie d'un rotor selon l'invention ;
Figure 2 : une vue en perspective éclatée d'un rotor selon l'invention qui n'est pas bobiné ;
Figures 3a et 3b : des vues en perspective d'un rotor bobiné selon l'invention sans les flasques ni le résolveur ;
Figures 4a et 4b : des vues respectivement du dessus et du dessous d'un rotor selon l'invention sans les flasques ni le résolveur ;
Figures 5a-5b : des vues en perspective d'un rotor bobiné selon l'invention muni de ses flasques de maintien ;
Figures 6a-6b : des vues respectivement du dessus et du dessous d'un rotor selon l'invention muni de ses flasques de maintien ;
Figure 7 : une vue en coupe d'un rotor selon l'invention présentant une variante d'ouverture pour sa fixation sur l'arbre.

Les éléments identiques, similaires ou analogues conservent la même référence d'une figure à l'autre.

### DESCRIPTION D'EXEMPLES DE REALISATION DE L'INVENTION

L'invention concerne un rotor 30 à pôles saillants pour une machine 10 électrique tournante notamment un alternateur ou un alterno-démarreur. Cette machine 10 est de préférence destinée à être mise en oeuvre dans un véhicule automobile.

On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile. Un tel alterno-démarreur est décrit par exemple dans le document WO-A-01/69762 auquel on se reportera pour plus de précisions,

Cette machine comporte essentiellement un carter 11 et, à l'intérieur de celui-ci, un rotor 30 solidaire en rotation d'un arbre 35 central de rotor et un stator 12 annulaire qui entoure le rotor 30 de manière coaxiale à l'arbre 35 d'axe B constituant également l'axe du rotor 30.

Le stator 12 comporte un corps en forme d'un paquet de tôles doté d'encoches, par exemple du type semi-fermé, pour le montage d'un bobinage de stator 13 comportant plusieurs enroulements. Ce bobinage de stator 13 comporte par exemple un jeu d'enroulements triphasé en étoile ou en triangle, dont les sorties sont reliées à un pont redresseur (non représenté) comportant des éléments redresseurs comportant des éléments redresseurs tels que des diodes ou des transistors du type MOSFET, notamment lorsque la machine 10 est du type réversible et consiste en un alterno-démarreur comme décrit par exemple dans le document FR-A-2.745.445 (US-A-6.002.219).

Les enroulements du bobinage de stator 13 sont obtenus à l'aide d'un fil continu, électriquement conducteur, revêtu d'une couche isolante et monté dans les encoches concernées du corps du stator 12.

Selon une variante non représentée, pour un meilleur remplissage des encoches du corps du stator 12, les enroulements 13 sont réalisés à l'aide de conducteurs en forme de barres, tel que des épingles, reliées entre elles par exemple par soudage.

Selon une autre variante non représentée, pour réduire le taux d'ondulation et les bruits magnétiques, le bobinage de stator 13 comporte deux jeux d'enroulements triphasés pour former un dispositif d'enroulements composites de stator 12, les enroulements étant décalés de trente degrés électriques comme décrit par exemple dans les documents US-A1-2002/0175589, EP-0.454.039 et FR-A-2.784.248. Dans ce cas il est prévu deux ponts redresseurs et toutes les combinaisons d'enroulements triphasés en étoile et/ou en triangle sont possibles.

D'une manière générale, l'alternateur est du type polyphasé et le pont redresseur permet notamment de redresser le courant alternatif produit dans les enroulements du stator 12 en un courant continu notamment pour charger la batterie (non représentée) du véhicule automobile et alimenter les charges et les consommateurs électriques du réseau de bord du véhicule automobile.

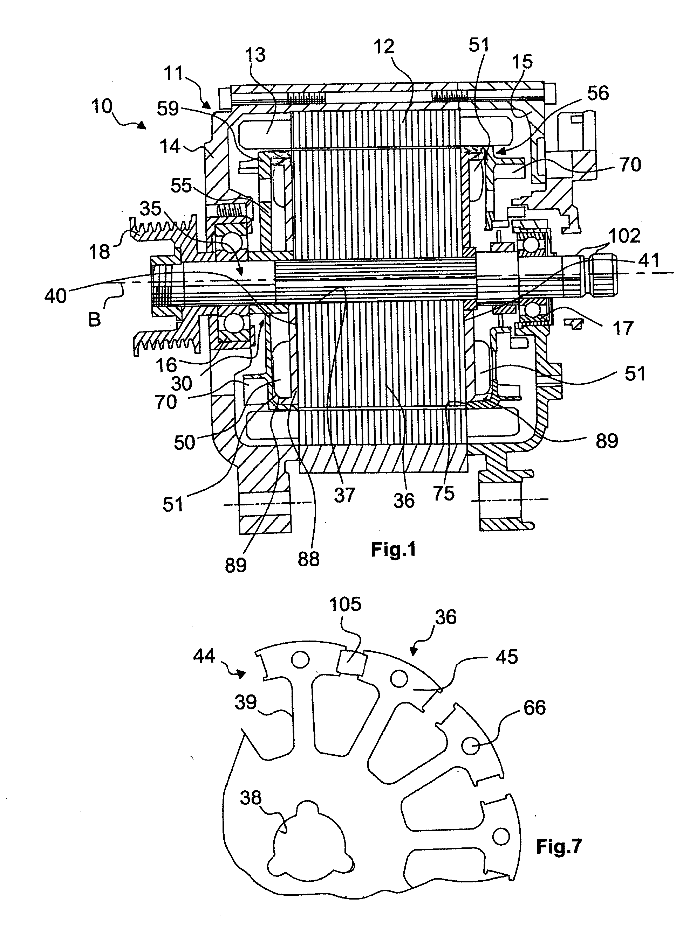

Comme illustré à la Figure 1, l'arbre 35 du rotor 30 est monté à rotation autour de son axe B d'orientation axiale dans le stator 12 de la machine 10.

Le carter 11 est en au moins deux parties, à savoir un palier 14 avant et un palier 15 arrière. Les paliers 14, 15 sont de forme creuse et portent chacun centralement un roulement à billes respectivement 16 et 17 pour le montage à rotation de l'arbre 35 du rotor 30.

Le carter 11 comporte une partie intermédiaire (non référencée) portant intérieurement le corps du stator. Cette partie intermédiaire est intercalée axialement entre les paliers 14, 15 dotés chacun d'une pluralité d'ouvertures, dont l'une (non référencée) est visible à la figure 1, pour ventilation interne de la machine à l'aide d'un ventilateur décrit plus en détails ci-après.

L'arbre 35 du rotor 30 porte à son extrémité avant une poulie 18 qui est agencée à l'extérieur du carter 11. La poulie 18 appartient à un dispositif de transmission de mouvements par l'intermédiaire d'au moins une courroie (non représentée) entre l'alternateur et le moteur thermique du véhicule automobile.

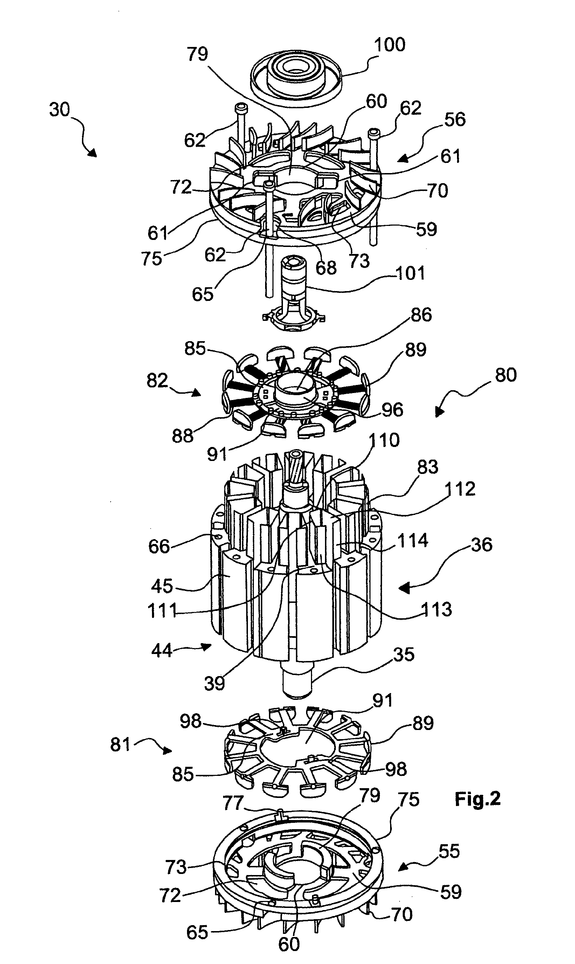

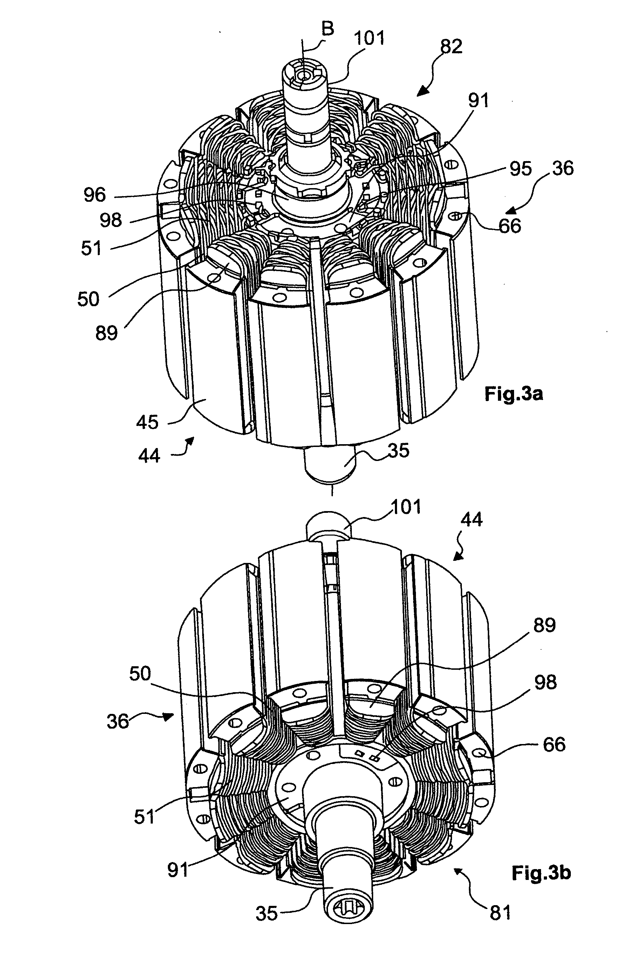

La Figure 2 montre le rotor 30 comportant l'arbre 35, un paquet 36 de tôles monté coaxialement sur l'arbre 35, ce paquet 36 de tôles comportant au moins deux pôles 44 saillants radialement. Le rotor 30 comporte en outre un bobinage 50 d'excitation (cf. Figures 3a-3b) enroulé autour de chaque pôle 44, de manière que des portions 51 d'extrémité axiale du bobinage 50, dîtes « chignons » font saillie axialement par rapport à chaque face 40, 41 d'extrémité radiale externe du paquet 36 de tôles. Des flasques 55, 56 de maintien du paquet 36 de tôles et des chignons 51 des bobinages 50 sont agencés axialement de part et d'autre du paquet 36 de tôles.

Plus précisément, le paquet 36 de tôles est monté coaxialement sur l'arbre 35 de rotor 30 dans le carter 11, à l'intérieur du stator 12. Le paquet 36 de tôles est monté solidaire en rotation de l'arbre 35. A cet effet, le paquet 36 de tôles comporte un orifice 37 axial central qui est emmanché à force sur un tronçon moleté de l'arbre 35. En variante, l'âme du paquet 36 de tôles présente une ouverture 38 munie d'évidements répartis de manière régulière circonférentiellement autour de l'ouverture 38 destinés à coopérer avec des languettes de forme correspondante appartenant à l'arbre 35 (cf. Figure 7). Dans un exemple de réalisation, ces évidements présentent en vue de dessus une forme circulaire.

Le paquet 36 de tôles est formé d'un empilement axial de tôles qui s'étendent dans un plan radial perpendiculaire à l'axe B de l'arbre 35. Le paquet 36 de tôles forme le corps du rotor 30 et est en matière ferromagnétique. Ce paquet 36 de tôles comporte ici une âme centrale cylindrique et des pôles 44 saillants radialement à partir de l'âme. Ces pôles 44 sont dans un mode de réalisation d'un seul tenant avec l'âme. En variante les pôles 44 sont rapportés sur l'âme, par exemple par une liaison du type tenons-mortaises comme décrit dans le document FR 2 856 532. Un pôle 44 sur deux ou tous les pôles 44 sont rapportés sur l'âme de manière à faciliter le montage et le démontage des pôles 44. En variante, un retour 45 saillant d'un pôle 44 sur deux ou le retour 45 saillant de tous les pôles 44 est rapporté par rapport à un bras 39 correspondant.

Dans la suite de la description, des faces radiales orientées vers le milieu du paquet 36 de tôles seront qualifiées de faces internes tandis que les faces radiales orientées dans un sens opposé seront qualifiées de faces externes. On considère également que le côté arrière du rotor 30 est situé du côté du résolveur 100 tandis que le côté avant est situé du côté opposé.

Ainsi, le paquet 36 de tôles est délimité axialement par la première face 40 radiale externe d'extrémité avant et par la deuxième face 41 radiale externe opposée d'extrémité arrière.

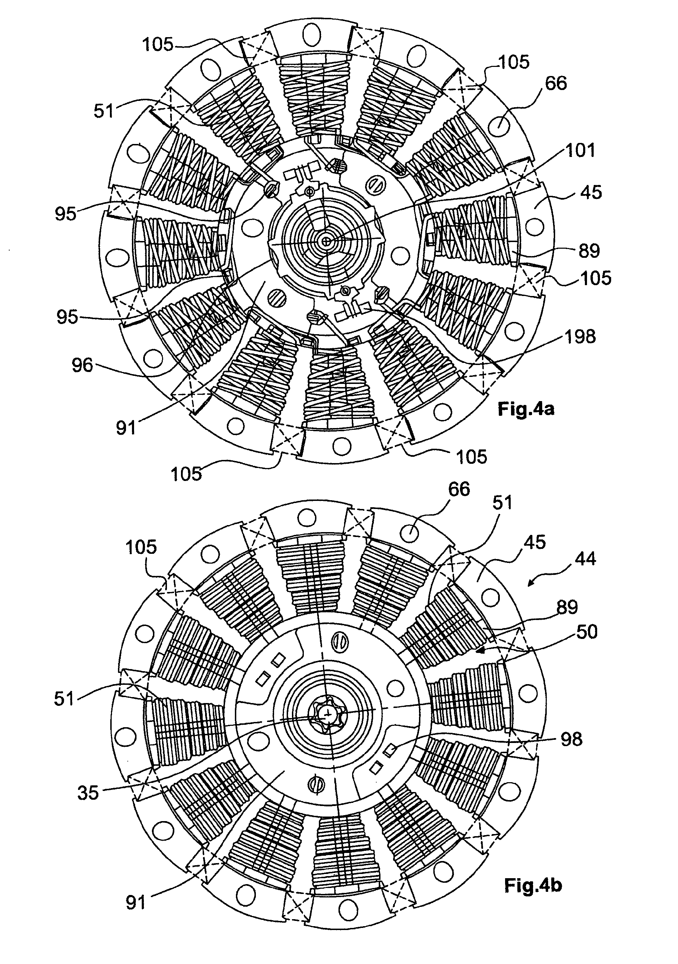

Dans un plan radial, les tôles du paquet 36 de tôles ont toutes un contour identique. Le contour des tôles est découpé de forme globalement circulaire et comporte les pôles 44 saillants, qui sont répartis régulièrement selon une direction radiale et saillants de l'arbre 35 vers la périphérie externe, comme illustré aux Figures 4a-4b. Le paquet 36 de tôles comporte au moins deux pôles 44 et dans l'exemple représenté aux figures, il comporte douze pôles 44.

Chaque pôle 44, comme mieux visible à la Figure 7, est constitué d'un bras 39 et d'un retour 45 saillant. Le bras 39 s'étend radialement depuis l'âme vers la périphérie extérieure en direction du stator 12. L'extrémité libre du pôle 44 se termine par le retour 45 saillant circonférentiellement de part et d'autre du bras 39. Un entrefer annulaire existe entre l'extrémité libre des pôles 44 et la périphérie intérieure du corps du stator 12.

La fonction du retour 45 saillant de chaque pôle 44 est de retenir dans la direction radiale un bobinage 50 d'excitation électriquement conducteur, qui est enroulé autour du bras 39 radial de chaque pôle 44 comme cela est décrit ci-dessous, à l'encontre de la force centrifuge subie par le bobinage 50 d'excitation lors de la rotation du rotor 30.

Les bobinages 50 d'excitation de chaque pôle 44 sont reliés électriquement entre eux par des fils de liaison, par exemple en série en variante en parallèle. Les fils de liaison et des bobinages 50 pourront être des fils en cuivre recouverts d'émail. Ces bobinages 50 d'excitation sont alimentés électriquement par un collecteur 101, qui comporte des bagues collectrices 102, qui sont agencées autour d'une extrémité arrière de l'arbre 35. Ce collecteur 101 est par exemple réalisé par surmoulage de matière électriquement isolante sur des éléments électriquement conducteurs (non visibles) reliant les bagues 102 à un anneau (non référencé) relié électriquement par des liaisons filaires aux extrémités du ou des bobinages 50 d'excitation du rotor 30.

Les bagues collectrices 102 sont alimentées électriquement par l'intermédiaire de balais (non représentés) qui appartiennent à un porte-balais et qui sont disposés de façon à frotter sur les bagues collectrices 102. Le porte-balais est généralement agencé dans le carter 11 et il est relié électriquement à un régulateur de tension (cf. Figure 1).

Avantageusement, pour augmentation de la puissance de la machine 10 électrique, le rotor 30 comporte en outre des aimants référencés 105 sur les Figures 4a-4b suivant un nombre égal au nombre de pôles (en l'occurrence douze). Les aimants 105 s'étendent axialement au voisinage de la périphérie externe du rotor 30. Ainsi les aimants 105 sont agencés régulièrement autour de l'arbre 35 en alternance avec les pôles 44. A cet effet, chaque aimant 105 est positionné entre deux pôles 44 saillants adjacents, les extrémités libres des deux pôles 44 saillants étant munies d'encoches maintenant l'aimant 105 de manière immobile entre les deux pôles. Une même encoche peut contenir un seul ou une pluralité d'aimants 105, par exemple deux aimants 105 dont un en terre rare et un en ferrite.

Le rotor 30 comporte au moins deux pôles 44 diamétralement opposés. Aux Figures 4a-4b il est prévu une alternance circonférentielle de douze pôles 44 et de douze aimants 105. Le nombre de pôles 44 et le nombre d'aimant 105 sont variables suivant l'application. On peut prévoir un mode de réalisation sans aimants 105. Dans un autre mode de réalisation le nombre d'aimants 105 est inférieur au nombre de pôles 44 comme visible à la Figure 7. Toutes ces dispositions permettent d'augmenter à volonté la puissance de la machine 10. Par simplicité, à titre non limitatif, on supposera dans la suite qu'il est prévu douze pôles 44 diamétralement opposés, douze bobinages 50 et douze aimants 105. Les pôles 44 et les aimants 105 sont répartis ici circonférentiellement de manière régulière.

Plus précisément dans les Figures 4a-4b les aimants 105 sont montés entre les retours saillants 45 de deux pôles saillants 44, lesdits retours 45 présentant des encoches sous la forme de rainures à profil en forme de U, comme décrit par exemple dans le document FR 2 784 248. Le montage des aimants 105 dans au moins une rainure pourra donc être réalisé à l'aide d'une lame et interposition d'une colle plus souple que l'aimant 105. En variante les aimants 105 sont montés dans les rainures à l'aide de ressorts.

D'une manière générale un faible jeu, appelé entrefer, existe entre la périphérie externe des pôles 44 et la périphérie interne du corps du stator 12.

Le rotor 30 comporte en outre un dispositif 80 d'isolation électrique des bobinages 50 par rapport au paquet de tôles 36. Ce dispositif 80 comporte deux éléments 81, 82 isolants. Le premier élément 81 isolant, dit élément 81 avant, est positionné contre la face 40 radiale externe du paquet 36 de tôles, tandis que le deuxième élément 82 isolant, dit élément 82 arrière, est positionné contre la face 41 radiale externe du paquet 36 de tôles. Ces éléments 81, 82 isolants assurent l'isolation électrique des chignons 51 des bobinages 50. Le dispositif 80 d'isolation de bobinages comporte en outre des isolants 83 d'encoche assurant l'isolation électrique des parties axiales des bobinages 50.

Plus précisément, chaque élément 81, 82 isolant comporte une paroi 85 radiale centrale munie d'une ouverture 86 principale autorisant le passage de l'arbre 35. Chaque élément 81, 82 comporte des bras 88 s'étendant radialement à partir du bord externe de la paroi 85 radiale vers l'extérieur de chaque élément 81, 82. Chacun de ces bras 88 comporte à son extrémité libre une casquette 89 s'étendant circonférentiellement de part et d'autre du bras 88. La casquette 89 s'étend également axialement en direction opposée au paquet de tôles 36 et ce à la périphérie interne des retours 45.

Les bras 88 des éléments 81, 82 isolants présentent de préférence, sur leur face externe, des rainures assurant un maintien radial des spires des bobinages 50. Les rainures des bras 88 de l'élément 81 isolant avant sont inclinées afin de faciliter le changement de rang lors de l'opération de bobinage consistant à enrouler un fil conducteur autour des différents pôles pour obtenir les bobinages 50.

Des pions 95 de guidage sont positionnés sur une face externe de la paroi 85 radiale de l'élément 82. Ces pions 95 qui présentent des faces latérales sur lesquelles les fils prennent appui permettent ainsi de guider les fils lors de l'opération de bobinage des pôles 44. Ces pions 95 permettent également de maintenir en position les fils des bobinages 50 dans une position fixe une fois l'opération de bobinage terminée. Ces pions 95 de guidage sont répartis sur la face externe de la paroi 85 radiale de manière adaptée à la configuration de bobinage souhaitée.

Chaque paroi 85 radiale comporte en outre deux parties 91 évidées destinées à recevoir des secteurs internes 79 d'un des flasques 55, 56 de maintien. Pour l'élément 82 isolant arrière, les parties 91 évidées sont diamétralement opposées. Bien entendu, le nombre et la forme des parties 91 évidées, en particulier l'angle d'ouverture et l'écart annulaire entre deux parties 91 évidées, pourront être adaptés en fonction du nombre et de la forme des secteurs 79 correspondants. Pour l'élément 81 isolant avant, les parties 91 évidées et l'ouverture 86 principale sont reliées entre elles, les parois internes délimitant l'orifice étant destinées à prendre appui localement sur la circonférence externe de l'arbre 35.

L'élément isolant 82 arrière comporte un rebord 96 annulaire délimitant l'ouverture 86 principale. Ce rebord 96 annulaire s'étend axialement depuis la face externe de l'élément 82 isolant vers l'extérieur du rotor 30. Lorsque le rotor 30 est monté, le rebord 96 est situé entre le colleteur 101 et un épaulement de l'arbre 35 du rotor 30.

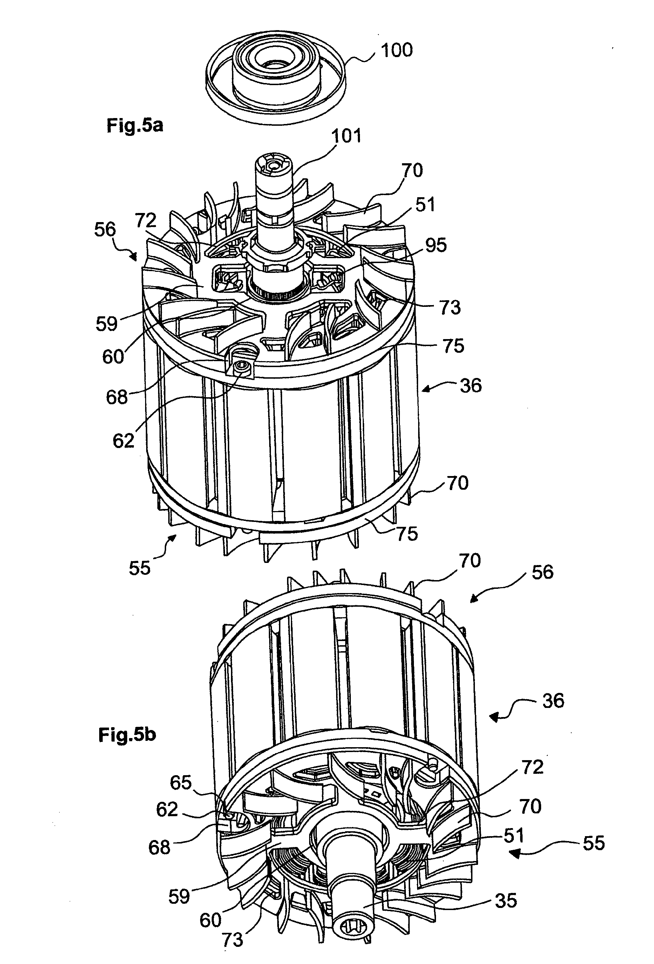

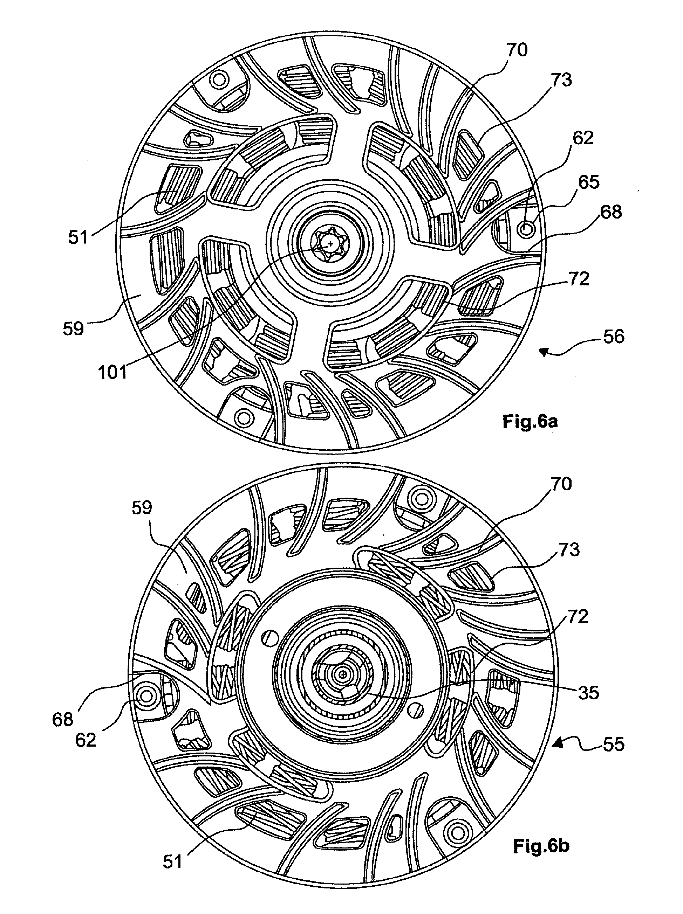

Les éléments 81, 82 isolants comportent chacun deux dispositifs 98 d'encliquetage (de clipsage) destinés à coopérer par encliquetage (clipsage) avec des ouvertures correspondantes ménagées sur chaque face d'extrémité radiale de l'âme du paquet 36 de tôles (cf. Figures 5a-5b, 6a-6b).

Les isolants 83 d'encoche prennent la forme d'une membrane fine, réalisée dans un matériau électriquement isolant et conducteur de chaleur, par exemple un matériau aramide de type dit Nomex (marque déposée), cette membrane fine étant pliée de manière que chaque isolant 83 d'encoche est plaqué contre les parois internes axiales du paquet 36 de tôles entre deux pôles 44 adjacents. A cet effet, l'isolant 83 d'encoche présente cinq parties 110-114, chaque partie 110-114 étant pliée par rapport à une partie adjacente suivant un segment de pliage sensiblement parallèle à l'axe B du rotor 30. Une première partie 110 située vers le centre du rotor 30 est plaquée contre une partie de la circonférence externe de l'âme située entre deux pôles 44 adjacents. Deux parties 111, 112 en regard une de l'autre sont plaquées contre deux faces tournées l'une vers l'autre des bras 39 des pôles 44. Deux parties 113, 114 sont plaquées contre deux portions de deux retours 45 saillants adjacents. Le nombre d'isolants 83 d'encoche dépend du nombre de pôles 44, auquel il est égal. Ici, le nombre d'isolants 83 d'encoche est de douze.

Chaque bobinage 50 d'excitation comporte des spires enroulées autour du bras 39 d'orientation radiale de chaque pôle 44 recouvert d'isolants 83 d'encoche et des deux bras 88 des éléments 81, 82 isolants situés chacun à une extrémité de ce pôle 44, de manière que les chignons 51 du bobinage 50 d'excitation font saillie axialement par rapport à chaque face 40, 41 d'extrémité radiale externe du paquet 36 de tôles, comme représenté aux Figures 3a-3b. Plus particulièrement, la face radiale externe de chaque chignon 51 est décalée axialement vers l'extérieur par rapport à la face 40, 41 radiale externe associée du paquet 36 de tôles. Chaque pôle 44 comporte ainsi un bobinage 50 d'excitation qui comporte lui-même deux chignons 51 opposés avec formation d'un espace interbobinage entre deux bobinages successifs.

Suivant ce bobinage, chaque chignon 51 est en appui contre la face de la casquette 89 tournée vers le chignon 51. La casquette 89 est maintenue immobile par rapport au pôle 44 grâce au bras 88 associé plaqué entre une face radiale du pôle 44 et les fils des bobinages. La casquette 89 en combinaison avec le rebord 75 du flasque permet ainsi de retenir les chignons 51 malgré la force centrifuge provoquée par la rotation du rotor 30 s'exerçant sur lesdits chignons 51.

Le premier flasque 55 de maintien du paquet 36 de tôle, dit flasque 55 avant et le deuxième flasque 56 de maintien du paquet 36 de tôle, dit flasque 56 arrière, sont montés coaxialement à l'arbre 35 de manière à enserrer axialement les éléments 81, 82 isolants et le paquet 36 de tôles. Ces flasques 55, 56 sont en matériau amagnétique en étant avantageusement métalliques pour mieux évacuer la chaleur.

Chaque flasque 55, 56 comporte une paroi 59 radiale s'étendant dans un plan radial perpendiculaire à l'axe B de l'arbre 35. Cette paroi 59 radiale est munie d'une ouverture 60 principale autorisant le passage de l'arbre 35. Le flasque 56 arrière comporte deux évidements 61 diamétralement opposés débouchant vers l'ouverture 60. Ces évidements 61 de forme sensiblement carrée vue du dessus permettent le passage chacun d'une patte (Dont l'une est référencée en 198 à la Figure 4a) du collecteur 101 du type de celui décrit dans le document FR 2 710 197 auquel on se reportera. Dans cette Figure 4a les pattes 198 ne sont pas encore rabattues pour serrer les extrémités des fils des bobinages 50. On notera que quatre des pions 95 internes d'extrémités sont décalés radialement par rapport aux autres pions 95 pour un montage en parallèles des bobinages 50. Plus précisément deux pions internes d'extrémité 95 sont disposés de part et d'autre de chaque patte 198. Dans cette Figure 4a on a coupé pour plus de clarté les extrémités des fils de liaison entre les bobinages 50. Ces extrémités sont enroulés autour des pions internes 95 et destinées à être fixés par sertissage dans les pattes 198. Les pions 95 ont une section de forme rectangulaire à coins chanfreinés pour ne pas blesser les portions de fils de liaison entre deux bobinages 50 consécutifs. Comme visible dans cette Figure 4a les autres pions 95 sont implantés globalement sur la même circonférence et les extrémités de chaque bobinage 50 sont en contact avec les bords latéraux concernés de deux pions 95 consécutifs pour une liaison en continu des bobinages 50. Les bords longitudinaux inférieurs des pions 95 de guidage retiennent radialement le fil de liaison entre deux bobinages 50 consécutifs. Le montage a ainsi une bonne tenue malgré l'action de la force centrifuge. Bien entendu lorsque les bobinages 50 sont montés en série deux pions inférieurs 95 suffisent.

On appréciera que la solution précitée à pions 95 assure la continuité entre les différents bobinages 50, qui sont tous au même potentiel. Les bobinages 50 peuvent être réalisées à l'aide d'une aiguille centralement creuse pour passage du fil et qui se déplace circonférentiellement, axialement et radialement. Cette aiguille bascule pour passer d'un pion 95 à un autre. Bien entendu en variante on peut supprimer les pions 95 internes et fixer directement les extrémités des fils sur les pattes 198. Bien entendu en variante les bobinages pourront être reliés entre eux comme dans le document WO 2007/003835.

La paroi 59 radiale de chaque flasque 55, 56 présente un rebord 75 annulaire s'étendant sur toute la périphérie externe de la paroi 59 radiale et s'étendant axialement en direction du centre du rotor 30. Ce rebord 75 annulaire présente une face en appui sur les faces d'extrémité radiale externe des pôles 44 de sorte que les casquettes 89 des éléments 81 ,82 isolants sont prises en sandwich entre une face annulaire interne du rebord 75 et les chignons 51. Une telle configuration permet aux flasques 55, 56 de participer avec les casquettes 89 au maintien des chignons 51 malgré la force centrifuge provoquée par la rotation du rotor 30. Dans une variante, il serait également possible de faire appel uniquement au rebord 75 annulaire des flasques 55, 56 pour maintenir les chignons 51 en position. Dans ce cas les éléments 51, 52 isolants sont donc dépourvus de casquettes 89.

La face externe de la paroi 59 de chaque flasque 55, 56 comporte d'un seul tenant des pales 70 formant un ventilateur. Chaque pale 70 s'étend axialement vers l'extérieur du rotor 30 depuis la face radiale externe du flasque 55, 56 associé. Avantageusement pour une meilleure évacuation de la chaleur, les pales 70 sont réalisées venues de matière avec le flasque 55, 56 associé. De préférence, les pales 70 sont agencées à la périphérie de la face radiale externe du flasque 55, 56 de façon dissymétrique par rapport à l'axe B de l'arbre 35 pour augmenter les performances de ventilation et réduire les bruits lorsque le rotor 30 tourne.

En variante, les pales 70 appartiennent à un ventilateur séparé du flasque 55, 56. L'utilisation de flasques 55, 56 et de ventilateurs séparés permet d'adapter facilement les ventilateurs en fonction de la puissance de la machine 10 ciblée. Le flasque 55, 56 et le ventilateur sont alors fixés entre eux au moyen d'un dispositif de fixation formé par exemple par des éléments de fixation associés aux flasques 55, 56 coopérant avec des orifices du ventilateur. Cette fixation pourra être réalisée à l'aide de vis comme à la Figure 16 du document US 6 784 586, en variante par rivetage ou soudage par points.

Chaque flasque 55, 56 comporte par ailleurs une première série d'orifices 72 traversants situés autour de l'ouverture 60 principale, ces orifices 72 présentant un angle d'ouverture au moins égal à l'angle entre deux pôles 44 saillants successifs. Ici, cette première série d'orifices 72 comporte quatre orifices 72 présentant le même angle d'ouverture. Bien entendu, cela dépend des applications. Les quatre orifices 72 du flasque 55 avant sont agencés de manière régulière autour de l'ouverture 60 principale. On notera que les orifices 72 n'ont pas la même taille d'un flasque 55 à l'autre et qu'il est créé et qu'il est réalisé un écoulement axial de l'air entre les bobinages 50.

Chaque flasque 55, 56 comporte en outre une deuxième série d'orifices 73 traversants, chaque orifice 73 de la deuxième série étant positionné entre deux pales 70 successives. Il est possible de ménager de tels orifices 73 dans toutes les zones séparant deux pales 70 successives ou uniquement dans certaines de ces zones en fonction du circuit de ventilation souhaité. Ces orifices 73 présentent un angle d'ouverture plus petit que l'angle d'ouverture des orifices 72 de la première série d'orifices 72. Ici, les deuxièmes séries d'orifices 73 comportent quatorze orifices 73 de taille inégale. En variante il est prévu des lamages supplémentaires à l'image des lamages 68 décrits ci après. Ces lamages affectent radialement la périphérie externe de la paroi radiale 59 et axialement une partie du rebord 75. Ces lamages pourront être implantés au niveau des espaces libres entre deux retours 45. Bien entendu on peut supprimer des orifices 73 et remplacer ceux-ci par des lamages. Tout dépend des applications. La deuxième série d'orifices 73 pourra ne pas avoir la même taille d'un flasque à l'autre.

On notera, comme visible dans les Figures 4a et 4b, que la largeur des chignons 51 et des bobinages 50 est décroissante par couche en allant radialement de la périphérie externe à la périphérie interne du chignon 51. Il en résulte la présence d'un espace interbobinage précité définissant un passage axial traversant (non référencé) entre deux bobinages 50 successifs. Les orifices 72 sont en vis-à-vis d'au moins la périphérie interne d'un espace interbobinage et donc d'un passage entre deux bobinages successifs comme visible dans les Figures 4a et 4b. Les orifices 72 du flasque 56 sont plus larges circonférentiellement et radialement que ceux du flasque 55. Les orifices 73 sont implantés radialement à l'extérieur des orifices 72, c'est-à-dire sur une circonférence moyenne supérieure à celle des premiers orifices, et ce, d'une part, au voisinage de la périphérie externe d'au moins un espace interbobinage et donc d'un passage et d'autre part, dans les zones libres entre deux pales 70 agencée de manière dissymétrique pour réduire les bruits. Il est réalisé ainsi une dissymétrie entre les deux flasques 55, 56 permettant une circulation axiale de l'air non perturbée par la présence éventuelle des aimants 105 implantés à la périphérie externe du paquet de tôles 36 entre deux retours 45 implantés à l'extérieur des fentes.

L'invention tire partie de la présence des espaces interbobinage et donc des passages axiaux traversants entre deux bobinages 50 en vis à vis pour implanter les orifices 72, 73 et assurer une circulation de l'air à l'intérieur du rotor. On notera que certains des orifices sont en vis-à-vis de la périphérie externe d'un chignon, l'air pouvant accéder à au moins un espace interbobinage du fait de la forme creuse des flasques 55, 56. Il en est de même en ce qui concerne les extrémités circonférentielle des orifices 72.

Lorsque le rotor 30 tourne, les pales 70 et les deux séries d'orifices 72, 73 ainsi que les lamages permettent ainsi d'évacuer la chaleur emmagasinée notamment par circulation d'air à l'intérieur de la machine 10. Suivant le circuit de ventilation, l'air issu de l'extérieur du rotor 30 va pénétrer à l'intérieur du rotor 30 par les orifices 72, 73 d'un flasque 55, 56 pour s'écouler ensuite le long du rotor 30 à l'intérieur des espaces interbobinage ; entre deux pôles 44 successifs pour ensuite ressortir du côté opposé via les orifices 72, 73 du flasque 55, 56 opposé. Les flasques 55, 56 constituent via leurs pales 70 des ventilateurs internes ; les paliers 14, 15 présentant de manière connue des ouvertures d'entrée et de sortie d'air. Le nombre d'orifices 72, 73, et de lamages leurs dimensions, le nombre de pales 70, ainsi que leur agencement, pourront être adaptés en fonction du circuit de ventilation souhaité tout en conservant la résistance mécanique des flasques 55,56.

La paroi 59 radiale de chaque flasque 55, 56 présente en outre sur sa face interne tournée vers le paquet 36 de tôles deux secteurs internes 79 s'étendant axialement vers le paquet 36 de tôles. Chaque secteur 79 est inséré dans une partie 91 évidée d'une paroi 85 radiale d'un élément 81, 82 isolant. Dans un exemple ces secteurs 79 sont constitués par deux portions diamétralement opposées d'un même anneau. Les secteurs 79 constituent des butées axiales pour l'âme du paquet de tôles 36.

Le rebord 75 annulaire de chaque flasque 55, 56 comporte deux pions 77 de centrage destinés à coopérer avec des ouvertures 66 axiales ménagées dans les pôles 44 saillants. Les pions 77 permettent ainsi de faciliter le positionnement angulaire des flasques 55, 56 lors du montage.

Dans un mode de réalisation les flasques 55, 56 en matériau amagnétique sont réalisés en matière moulable tel que de l'aluminium pour bien évacuer la chaleur ou en variante en matière plastique avantageusement renforcée par des fibres.

Les flasques 55, 56 sont fixés l'un à l'autre par des tirants 62 d'orientation axiale, qui sont ici au nombre de trois. A cet effet chaque flasque 55, 56 comporte trois orifices 65 destinés à permettre le passage de chaque tirant 62. Les tirants 62 traversent axialement, via les ouvertures 66 axiales ménagées dans les pôles, le paquet 36 de tôles depuis le flasque 55 avant jusqu'au flasque 56 arrière. Ces tirants 62 sont en matériau amagnétique, par exemple en Aluminium ou en inox.

La face radiale externe de chaque flasque 55, 56 comporte des lamages 68 pour loger les extrémités de chaque tirant 62. Ces lamages 68 autorisent un passage de l'air.

Selon une variante non représentée de l'invention, les flasques comportent d'autres moyens de refroidissement tels qu'au moins un caloduc implanté au niveau d'un retour 45. Ce caloduc pourra être implanté à la faveur d'un orifice 65 libre. L'arbre peut être un arbre conformé pour constituer un caloduc.

Selon un autre aspect de l'invention les orifices 65 de fixation du flasque 55 avant sont taraudés. Les tirants 62 comportent une extrémité filetée qui est vissée dans les orifices taraudés du flasque 55 avant lors du montage du rotor 30. En variante l'extrémité filetée du tirant 62 est autotaraudeuse en sorte que l'orifice 65 associé du flasque 55 est lisse. En variante, l'extrémité du tirant 62 est lisse et traverse l'orifice 65 associé du flasque 55, l'extrémité libre du tirant 62 étant écrasée au contact de la face externe du flasque 55 pour une fixation par rivetage. En variante, le tirant 62 est remplacé par une tige traversant les orifices 65 des flasques 55, 56 et du paquet 36 de tôles, les extrémités axiales de la tige étant écrasées au contact des faces externes des flasques 55, 56 pour une fixation par rivetage.

Le rotor 30 comporte un résolveur 100 permettant de connaître la position en rotation du rotor 30. Le résolveur 100 intervient notamment lorsque la machine 10 fonctionne en mode moteur (fonction démarreur), afin de pouvoir adapter convenablement la tension appliquée aux bobinages 50 du stator 12 en fonction de la position du rotor 30. Dans un exemple le résolveur 100 est remplacé par une cible magnétique associée à un ensemble de capteurs à effet Hall porté par un porte- capteur.

Plus précisément, le flasque arrière 56 est configuré pour porter un porte-cible qui est destiné à permettre à des capteurs associés de détecter la position angulaire du rotor 30. Les capteurs sont portés par un porte-capteurs dont la position est réglable circonférentiellement. La lecture de la cible est ici radiale. Le porte-cible avec sa cible et les capteurs solidaires d'un porte capteur appartiennent à des moyens de suivi de la rotation du rotor comme décrit dans le document WO01/69762 auquel on se reportera pour plus de précisions

On décrit ci-après le montage du rotor 30. Les isolants 83 d'encoche sont chacun installés entre deux pôles 44 successifs. Ensuite, les éléments 81, 82 isolants sont fixés sur le paquet 36 de tôle par encliquetage (clipsage) via les deux dispositifs 98. Chaque face d'extrémité radiale externe de chaque pôle 44 est alors en contact direct avec un bras 88 d'un élément 81, 82 isolant.

Les bobinages 50 d'excitation sont ensuite enroulés autour de chaque pôle 44 recouvert d'isolants 83 d'encoche et des deux bras 88 des éléments 81, 82 isolants associés à ce pôle 44, les fils des bobinages 50 étant guidés et maintenus par les rainures des bras 88 et par les pions 95 de guidage des éléments 81, 82 isolants.

Le paquet 36 de tôles, les éléments 81, 82 isolants et les bobinages 50 d'excitation associés sont montés sur l'arbre 35 de rotor 30, par exemple par emmanchement à force. Puis les flasques 55, 56 sont agencés axialement de part et d'autre du paquet 36 de tôles de manière que les pions 77 de centrage entrent dans des ouvertures 66 axiales ménagées dans les pôles 44 saillants et que les secteurs 79 sont positionnés à l'intérieur des parties 91 évidées des parois 85 des éléments 81, 82 isolants. Le collecteur 101 est positionné sur l'arbre 35, entre le deuxième flasque 56 et le deuxième élément 82 isolant.

Les rebords 75 annulaires des flasques 55, 56 présentent alors une face en appui sur les faces d'extrémité radiale externe des pôles 44 de sorte que les casquettes 89 des éléments 81, 82 isolants sont prises en sandwich entre une face annulaire interne du rebord 75 et les chignons 51. Une telle configuration permet aux flasques 55, 56 de participer avec les casquettes 89 au maintien des chignons 51 malgré la force centrifuge provoquée par la rotation du rotor 30.

La tige filetée des tirants 62 est ensuite introduite axialement dans les orifices 65 de fixation du flasque 55 avant. Les tirants 62 sont ensuite vissés dans les orifices 65 de fixation taraudés du flasque 56 arrière jusqu'à ce que la tête de chaque tirant 62 soit en appui au fond du lamage 68 associé du flasque 55 avant. Ainsi les tirants 62 permettent d'enserrer axialement le paquet 36 de tôle et les éléments 81, 82 isolants entre les deux flasques 55, 56.

Puis une opération d'équilibrage des flasques 55, 56 est réalisée. Cette opération consiste par exemple dans le perçage de trous ou d'évidements dans la périphérie de la face externe de la paroi 59 radiale de chaque flasque 55, 56 de manière que le rotor 30 ne vibre pas lorsqu'il est entraîné en rotation. Grâce à l'invention l'opération d'équilibrage est facilitée grâce aux flasques 55, 56 permettant de réduire le nombre d'organes de fixation.

Le résolveur 101 est positionné autour de l'arbre 35, sur la face externe de la paroi 59 radiale du deuxième flasque 56.

Lors du fonctionnement d'un tel rotor 30, les bobinages 50 d'excitation ont tendance à s'échauffer compte tenu du courant qui les parcourt.

Les flasques 55, 56 tournent avec l'arbre 35 du rotor 30. Les pales 70 brassent ainsi de l'air et de l'air circule entre les deux flasques 55, 56 le long des espaces entre deux pôles adjacents grâce aux deux séries d'orifices 72, 73 de chaque flasque 55, 56. Les pales 70 et les orifices 72, 73 dissipent ainsi dans l'air la chaleur accumulée à l'intérieur du rotor 30. La chaleur est donc évacuée de manière efficace dans l'air environnant par l'intermédiaire des pales 70 et des orifices 72, 73. L'air environnant est renouvelé grâce au brassage et aux turbulences induits par les pales 70.

Ainsi qu'il ressort à l'évidence de la description et des dessins les paquets de tôles du stator 12 et du rotor 30 permettent de diminuer les pertes dues aux courants de Foucault. Les évidements de l'ouverture 38 de la Figure 7 permettent de diminuer les contraintes lors de l'emmanchement à force de l'arbre moleté dans l'orifice central de l'âme du paquet de tôles 36. La solution à pôles 44 d'un seul tenant avec l'âme centrale du paquet de tôles 36 est plus avantageuse qu'une solution à pôles rapportés car cette solution présente une meilleure tenue à la force centrifuge et permet de garantir un plus petit entrefer entre la périphérie externe du rotor 30 et la périphérie interne du corps du stator 12. Les modes de réalisations décrits ci-dessus permettent d'utiliser les collecteurs 101 des alternateurs conventionnels, par exemple du type de ceux décrits dans le document FR 2 710 197 et également les montages conventionnels des aimants de ces alternateurs.

Il ressort également à l'évidence de la description et des dessins que les flasques 55, 56, de forme creuse, présentent un rebord 75 constituant un élément de pression pour maintenir le paquet de tôles 36 et éviter une déformation, notamment une ouverture de celui-ci. Le paquet de tôle 36 est serré entre les flasques 55, 56. Les rebords 75, configurés pour venir en contact avec les retours 45, rigidifient les flasques 55, 56 et constituent via leur périphérie interne une buté radiale pour les casquettes 89 des éléments 81, 82. Ainsi sous l'action de la force centrifuge la périphérie externe des casquettes 89 est admise à coopérer avec la périphérie interne des rebords 75 des flasques 55, 56. Ces flasques 55, 56 constituent par l'intermédiaire de leur rebord 75 une butée axiale pour les aimants 105 implantés entre deux retours consécutifs 45. La forme creuse des flasques 55, 56 permet de loger les chignons 51, les éléments 81, 82 avec leurs casquettes 89 et une partie du collecteur 101. On appréciera que les secteurs internes 79 des flasques 55, 56 évitent une déformation de l'âme du paquet 36 en combinaison avec les parois 85 des éléments 81, 82.

Les éléments 81, 82 sont, de manière précitée, en matière électriquement isolante. Ils pourront être en matière plastique, telle que du PA 6.6. Ils sont plus épais et moins bon conducteur de chaleur que les isolants d'encoche 83.

Bien entendu la présente invention n'est pas limitée aux exemples de réalisation décrits.

Ainsi il est possible de prévoir quatre tirants 62 à savoir un trou par tirant 62. En variante il est prévu deux tirants 62 diamétralement opposés et deux caloducs diamétralement opposés, chaque caloduc comportant une tige engagée dans au moins un trou d'un des flasques 55, 56 et au moins dans un tronçon des trous du paquet 36 de tôles et débouchant à l'extérieur du flasque 55, 56 concerné. Ces caloducs peuvent traverser complètement les flasques 55, 56 et le paquet 36 de tôles et être configurés à l'extérieur des flasques 55, 56 pour former des pales 70 de ventilateur. De tels caloducs sont décrits par exemple dans les Figures 11 A et 11 B du document FR 2 855 673 auquel on se reportera. Les dispositions des Figures 12, 13 et 24 de ce document sont également applicables.

Le nombre de pôles 44 dépend de manière précitée des applications. Ce nombre est égal à 12 dans les figures. En variante il peut être de 8 ou 10. Par rapport au document WO 2007/00385 on augmente dans tous les cas le nombre de bobinages 50 tout en ayant la possibilité d'augmenter le nombre d'aimants 105 à volonté pour augmenter la puissance de la machine 10 électrique tournante à pôles 44 saillants. Ainsi le nombre d'aimants 105 pourra être inférieur au nombre de pôles 44.

Bien entendu on peut remplacer les aimants 105 par des pièces amagnétiques pour avoir une continuité de matière à la périphérie externe du rotor 30. On peut réaliser de nombreuses combinaisons. Ainsi tous les espaces entre les retours 45 pourront être libres. En variante une partie de ces espaces entre les retours 45 pourront être libres et les autres occupés par des aimants 105 et/ou des pièces amagnétiques. En variante les aimants 105 pourront être de nuance différente. Par exemple certains des espaces entre deux retours 45 pourront être occupés par des aimants 105 en ferrite et une partie au moins des autres espaces pourront être occupé par des aimants 105 en terre rare.

Bien entendu en variante l'un au moins des éléments 81, 82 est dépourvu de rainures et l'isolant 83 peut être d'un seul tenant avec l'un des éléments 81, 82, par exemple par moulage. Dans encore une autre variante l'isolant 83 pourra être en deux parties chacune d'un seul tenant avec l'un des éléments 81, 82. L'isolant 83 pourra être donc en variante en PA 6.6 en étant moins épais que les éléments 81, 82.

En variante les flasques 55, 56 sont obtenus par moulage, ou forgeage ou par injection de matière plastique ou de métal.

En variante les pales 70 d'au moins un flasque 55, 56 sont supprimées. Les deux flasques 55, 56 sont en variante dépourvus de pales, notamment lorsque la machine 10 électrique tournante est refroidie par eau. Plus précisément en variante la partie intermédiaire du carter 11 comporte un canal pour circulation d'un liquide de refroidissement, tel que le liquide de refroidissement du moteur thermique et le corps du stator 12 est monté par frettage à l'intérieur de la partie intermédiaire.

Bien entendu lorsque les deux flasques 55, 56 ne portent pas de pales 70 on a plus de liberté pour implanter la deuxième série d'ouvertures 73, qui peuvent ainsi être plus larges circonférentiellement pour s'étendre de part et d'autre d'un bobinage 50.

Dans tous les cas au moins l'une des séries d'orifices 72, 73 et /ou de lamages est différente d'un flaque 55, 56 à l'autre.

Bien entendu en variante les séries d'orifices 72, 73 et/ou de lamages sont identiques d'un flasque 55, 56 à l'autre.

En variante le carter 11 comporte un palier avant et un palier arrière comme divulgué par exemple à la Figure 14 du document US 6 784 586 dans le document montrant une partie des balais et du pont redresseur de courant.

La machine 10 électrique tournante est en variante un alternateur dépourvu de résolveur 100 ou de tout autre moyen de suivi de la rotation du rotor 30.

Le refroidissement du rotor 30 est amélioré. En effet, l'invention augmente les performances aérauliques intrinsèques des flasques 55, 56 et permet une meilleure évacuation de la chaleur au niveau du rotor 30 par convection thermique. En outre, on diminue le bruit sonore de type aéraulique. Ce meilleur refroidissement du rotor 30 permet de maintenir les bobinages 50 du rotor 30 sur la plage de fonctionnement de 0 à 18000 tours par minute et d'augmenter le nombre de pôles 44 du rotor 30. En outre, on diminue le coût et le temps de fabrication du rotor 30 en minimisant opération d'imprégnation de vernis qui est longue et coûteuse. En effet on peut déposer des gouttes de vernis au niveau des chignons 51 pour avoir une meilleure cohésion des spires des bobinages 50, ainsi qu'une meilleure tenue à la force centrifuge. En variante les fils de liaison et des bobinages 50 pourront être recouverts d'une couche supplémentaire de liaison sous la forme d'un polymère d'imprégnation, qui par chauffage et polymérisation permet de lier entre elles les spires des bobinages 50 pour une meilleure tenue à la force centrifuge.

La quantité de vernis est réduite dans tous les cas. Ce vernis ou la couche de liaison assurent la cohésion des bobinages 50. Ils ne servent pas à la transmission de chaleur avec le paquet 36 de tôles et les flasques 55, 56.

En variante l'un des flasques 55, 56 en matériau amagnétique est en matière plastique et l'autre en aluminium, en laiton ou à base de magnésium. Le flasque en matière plastique est avantageusement en matière plastique renforcé par des fibres. La réalisation du flasque en matière plastique ou en aluminium permet d'obtenir aisément les pales par moulage. On peut réaliser l'équilibrage du flasque en matière plastique par apport de matière dans au moins une saillie axiale du flasque comme décrit dans le document DE 23 46 345 auquel on se reportera. L'équilibrage de l'un au moins des flasques est réalisé en variante par sertissage d'au moins une masse d'équilibrage dans l'un des évidements réalisés dans des saillies de ce flasque comme décrit dans le document DE 30 31 622 auquel on se reportera pour plus de précisions.

## Revendications

1. Rotor (30) de machine (10) électrique tournante comportant :
- un arbre (35) de rotor destiné à être monté rotatif autour de son axe (B),
- un paquet (36) de tôles monté coaxialement sur l'arbre (35) de rotor, ce paquet (36) de tôles comportant au moins deux pôles (44) saillants radialement,
- un bobinage (50) d'excitation enroulé autour de chaque pôle (44), de manière que des portions (51) d'extrémité axiale du bobinage, dîtes « chignons » font saillie axialement par rapport à chaque face d'extrémité radiale externe du paquet (36) de tôles,
- un ensemble de flasques (55, 56) de maintien du paquet (36) de tôles et de chignons (51) du bobinage (50) agencés axialement de part et d'autre du paquet (36) de tôles,
**caractérisé en ce que** :- chaque flasque (55, 56) de maintien comporte :
- une paroi (59) radiale munie d'une ouverture (60) principale autorisant le passage de l'arbre (35),
- un rebord (75) annulaire s'étendant sur toute la périphérie externe de la paroi (59) radiale et s'étendant axialement en direction du rotor (30), ce rebord (75) annulaire présentant une face en appui sur les faces d'extrémité radiale externe du paquet (36) de tôles afin de maintenir en place les chignons (51) malgré la force centrifuge provoquée par la rotation du rotor (30) s'exerçant sur lesdits chignons (51),
**en ce que** chaque flasque (55, 56) comporte une première série d'orifices (72) traversants situés autour de l'ouverture (60) principale, ces orifices (72) présentant un angle d'ouverture au moins égal à l'angle entre deux pôles (44) saillants successifs,
et **en ce que** chaque flasque (55, 56) présente une deuxième série d'orifices (73) traversants à l'extérieur de la première série d'orifices (72).

2. Rotor selon la revendication 1, **caractérisé en ce qu'**au moins un orifice (72) de la première série d'orifices traversant est ménagé dans la paroi (59) radiale pour permettre une circulation de l'air à l'intérieur du rotor (30) entre les deux pôles (44) saillants.

3. Rotor selon la revendication 1 ou 2, **caractérisé en ce que** la taille de la première série d'orifices (72) et/ou de la deuxième série d'orifices (73) est différente d'un flasque (55, 56) à l'autre.

4. Rotor selon la revendication 1 ou 2, **caractérisé en ce que** la première série d'orifices (72) de l'un des flasques (55, 56) est plus large circonférentiellement et plus haute radialement que la première série d'orifices (72) de l'autre flasque (55, 56).

5. Rotor selon l'une quelconque des revendications précédentes, **caractérisé en ce que** chaque flasque (55, 56) présente des lamages (68) affectant radialement la périphérie externe de la paroi radiale (59) et axialement en partie le rebord (75).

6. Rotor selon l'une quelconque des revendications précédentes, **caractérisé en ce que** l'un au moins des flasques (55, 56) porte des pales de ventilation (70) positionnées sur une première face de la paroi radiale (59) tournée vers l'extérieur du rotor (30).

7. Rotor selon la revendication 6, **caractérisé en ce que** les pales de ventilation (70) appartiennent à un ventilateur séparé rapporté à fixation sur le flasque (55, 56) par exemple par soudage par points, vissage ou rivetage.

8. Rotor selon la revendication 6, **caractérisé en ce que** les pales de ventilation (70) appartiennent au flasque (55, 56) en étant d'un seul tenant avec ce flasque (55, 56).

9. Rotor selon la revendication 6, **caractérisé en ce que** chaque orifice (73) de la deuxième série est positionné entre deux pales (70) successives.

10. Rotor selon l'une des revendications précédentes, **caractérisé en ce qu'il** comporte en outre deux éléments (81, 82) isolants positionnés de part et d'autre du paquet (36) de tôles, assurant l'isolation de chignons (51).

11. Rotor selon la revendication 10, **caractérisé en ce que** :
- la paroi (59) radiale de chaque flasque (55, 56) présente sur sa face interne tournée vers le rotor au moins un secteur (79) s'étendant axialement vers le paquet (36) de tôles,
- chaque élément (81, 82) isolant présente au moins une partie (91) évidée à l'intérieur de laquelle est inséré le secteur (79) d'un des flasques (55, 56).

12. Rotor selon la revendication 10 ou 11, **caractérisé en ce que** chaque élément (81, 82) isolant comporte :
- une paroi radiale (85) ;
- des bras (88) s'étendant vers l'extérieur à partir de bord externe de la paroi radiale (85) et maintenus plaqués contre une face d'extrémité radiale d'un pôle (44) saillant par un chignon (51), et
- des casquettes (89) situées à une extrémité des bras (88) et s'étendant circonférentiellement de part et d'autre du bras (88), ces casquettes (89) étant positionnées entre la tête du bobinage (50) et le rebord (75) annulaire d'un flasque (55, 56) de manière à participer à la retenue des chignons (51).

13. Rotor selon la revendication 12, **caractérisé en ce que** l'un des éléments isolant (82) présente des pions (95) de guidage de fils de liaison entre les bobinages (50).

14. Rotor selon la revendication 12 ou 13, **caractérisé en ce que** les éléments isolants (81, 82) comportent au moins deux dispositifs d'encliquetage (98) destinés à coopérer par encliquetage avec des ouvertures ménagées sur chaque face d'extrémité radiale du paquet de tôles.

15. Rotor selon l'une des revendications 1 à 14, **caractérisé en ce que** chaque flasque (55, 56) comporte au moins un pion (77) de centrage destiné à coopérer avec des ouvertures (66) axiales ménagées dans les pôles (44) saillants.

16. Rotor selon la revendication 15, **caractérisé en ce que** chaque flasque (55, 56) comporte au moins deux orifices (65), les orifices (65) des flasques et les ouvertures (66) axiales des pôles (44) assurant le passage de tirants (62) d'assemblage pour assembler les flasques (55, 56) autour du paquet (36) de tôles.

17. Rotor selon l'une des revendications 1 à 16, **caractérisé en ce que** l'extrémité libre d'un pôle (44) se termine par un retour (45) saillant circonférentiellement de part et d'autre d'un bras (39) et **en ce qu'**il comporte au moins un aimant (105) positionné entre deux retours (45) de deux pôles (44) saillants adjacents.

18. Rotor selon l'une des revendications 1 à 17, **caractérisé en ce que** les flasques (55, 56) sont réalisés en matériau amagnétique, tel que l'aluminium ou de la matière plastique avantageusement renforcée par des fibres.

## Patentansprüche

1. Rotor (30) einer elektrischen Rotationsmaschine (10), welcher aufweist:
- eine Rotorwelle (35), welche dazu bestimmt ist, um ihre Achse (B) drehbar gelagert zu werden,
- ein Blechpaket (36), welches koaxial auf der Rotorwelle (35) angebracht ist, wobei dieses Blechpaket (36) mindestens zwei radial vorstehende Pole (44) aufweist,
- eine Erregerwicklung (50), welche um jeden Pol (44) gewickelt ist, derart, dass Abschnitte (51) von axialen Enden der Wicklung, "Schaltenden" genannt, axial bezüglich jeder äußeren radialen Endfläche des Blechpakets (36) vorstehen,
- eine Anordnung von Lagerschilden (55, 56) zum Halten des Blechpakets (36) und der Schaltenden (51) der Wicklung (50), die axial beiderseits des Blechpakets (36) angeordnet sind,
**dadurch gekennzeichnet, dass** jeder Lagerschild (55, 56) aufweist:
- eine radiale Wand (59), die mit einer Hauptöffnung (60) versehen ist, welche den Durchgang der Welle (35) ermöglicht,
- einen ringförmigen Kragen (75), der sich entlang des gesamten Außenumfangs der radialen Wand (59) erstreckt und sich axial in Richtung des Rotors (30) erstreckt, wobei dieser ringförmige Kragen (75) eine Stirnfläche aufweist, die an den äußeren radialen Endflächen des Blechpakets (36) anliegt, um die Schaltenden (51) trotz der durch die Rotation des Rotors (30) hervorgerufenen Zentrifugalkraft, die auf die Schaltenden (51) ausgeübt wird, festzuhalten,
dadurch, dass jeder Lagerschild (55, 56) eine erste Reihe von durchgehenden Öffnungen (72) aufweist, die um die Hauptöffnung (60) herum angeordnet sind, wobei diese Öffnungen (72) einen Öffnungswinkel aufweisen, der mindestens gleich dem Winkel zwischen zwei aufeinander folgenden vorstehenden Polen (44) ist,
und dadurch, dass jeder Lagerschild (55, 56) eine zweite Reihe von durchgehenden Öffnungen (73) außerhalb der ersten Reihe von Öffnungen (72) aufweist.

2. Rotor nach Anspruch 1, **dadurch gekennzeichnet, dass** mindestens eine Öffnung (72) der ersten Reihe von durchgehenden Öffnungen in der radialen Wand (59) ausgebildet ist, um eine Zirkulation der Luft innerhalb des Rotors (30) zwischen den zwei vorstehenden Polen (44) zu ermöglichen.

3. Rotor nach Anspruch 1 oder 2, **dadurch gekennzeichnet, dass** die Größe der ersten Reihe von Öffnungen (72) und/oder der zweiten Reihe von Öffnungen (73) bei den beiden Lagerschilden (55, 56) verschieden ist.

4. Rotor nach Anspruch 1 oder 2, **dadurch gekennzeichnet, dass** die erste Reihe von Öffnungen (72) eines der Lagerschilde (55, 56) in Umfangsrichtung größer und radial höher als die erste Reihe von Öffnungen (72) des anderen Lagerschildes (55, 56) ist.

5. Rotor nach einem der vorhergehenden Ansprüche, **dadurch gekennzeichnet, dass** jeder Lagerschild (55, 56) Senkungen (68) aufweist, von denen radial der Außenumfang der radialen Wand (59) und axial teilweise der Kragen (75) betroffen ist.

6. Rotor nach einem der vorhergehenden Ansprüche, **dadurch gekennzeichnet, dass** mindestens einer der Lagerschilde (55, 56) Lüftungsflügel (70) trägt, die auf einer der Außenseite des Rotors (30) zugewandten ersten Stirnseite der radialen Wand (59) positioniert sind.

7. Rotor nach Anspruch 6, **dadurch gekennzeichnet, dass** die Lüftungsflügel (70) zu einem separaten Lüfter gehören, der an dem Lagerschild (55, 56) zum Beispiel durch Punktschweißung, Verschraubung oder Nietung fest angebaut ist.

8. Rotor nach Anspruch 6, **dadurch gekennzeichnet, dass** die Lüftungsflügel (70) zu dem Lagerschild (55, 56) gehören und mit diesem Lagerschild (55, 56) aus einem Stück ausgebildet sind.

9. Rotor nach Anspruch 6, **dadurch gekennzeichnet, dass** jede Öffnung (73) der zweiten Reihe zwischen zwei aufeinander folgenden Flügeln (70) positioniert ist.

10. Rotor nach einem der vorhergehenden Ansprüche, **dadurch gekennzeichnet, dass** er außerdem zwei beiderseits des Blechpakets (36) positionierte isolierende Elemente (81, 82) aufweist, welche die Isolation der Schaltenden (51) sicherstellen.

11. Rotor nach Anspruch 10, **dadurch gekennzeichnet, dass**
- die radiale Wand (59) jedes Lagerschilds (55, 56) auf ihrer dem Rotor zugewandten Innenseite mindestens einen Sektor (79) aufweist, der sich axial in Richtung des Blechpakets (36) erstreckt,
- jedes isolierende Element (81, 82) mindestens einen ausgesparten Teil (91) aufweist, in dessen Inneres der Sektor (79) eines der Lagerschilde (55, 56) eingesetzt ist.

12. Rotor nach Anspruch 10 oder 11, **dadurch gekennzeichnet, dass** jedes isolierende Element (81, 82) aufweist:
- eine radiale Wand (85);
- Arme (88), die sich vom äußeren Rand der radialen Wand (85) aus nach außen erstrecken und durch ein Schaltende (51) gegen eine radiale Endfläche eines vorstehenden Pols (44) gedrückt gehalten werden, und
- Kappen (89), die an einem Ende der Arme (88) angeordnet sind und sich beiderseits des Armes (88) in Umfangsrichtung erstrecken, wobei diese Kappen (89) zwischen dem Kopf der Wicklung (50) und dem ringförmigen Kragen (75) eines Lagerschilds (55, 56) derart positioniert sind, dass sie am Halten der Schaltenden (51) beteiligt sind.

13. Rotor nach Anspruch 12, **dadurch gekennzeichnet, dass** eines der isolierenden Elemente (82) Stifte (95) zur Führung von Verbindungsdrähten zwischen den Wicklungen (50) aufweist.

14. Rotor nach Anspruch 12 oder 13, **dadurch gekennzeichnet, dass** die isolierenden Elemente (81, 82) mindestens zwei Rastvorrichtungen (98) aufweisen, welche dazu bestimmt sind, durch Einrasten mit Öffnungen zusammenzuwirken, die auf jeder radialen Endfläche des Blechpakets ausgebildet sind.

15. Rotor nach einem der Ansprüche 1 bis 14, **dadurch gekennzeichnet, dass** jeder Lagerschild (55, 56) mindestens einen Zentrierstift (77) aufweist, der dazu bestimmt ist, mit axialen Öffnungen (66) zusammenzuwirken, die in den vorstehenden Polen (44) ausgebildet sind.

16. Rotor nach Anspruch 15, **dadurch gekennzeichnet, dass** jeder Lagerschild (55, 56) mindestens zwei Öffnungen (65) aufweist, wobei die Öffnungen (65) der Lagerschilde und die axialen Öffnungen (66) der Pole (44) den Durchgang von Montagebolzen (62) zum Montieren der Flansche (55, 56) um das Blechpaket (36) herum gewährleisten.

17. Rotor nach einem der Ansprüche 1 bis 16, **dadurch gekennzeichnet, dass** das freie Ende eines Pols (44) mit einem Ansatzstück (45) endet, das beiderseits eines Armes (39) in Umfangsrichtung vorsteht, und dadurch, dass er mindestens einen Magneten (105) aufweist, der zwischen zwei Ansatzstücken (45) zweier benachbarter vorstehender Pole (44) positioniert ist.

18. Rotor nach einem der Ansprüche 1 bis 17, **dadurch gekennzeichnet, dass** die Lagerschilde (55, 56) aus nichtmagnetischem Material wie etwa Aluminium oder Kunststoff, der vorteilhafterweise faserverstärkt ist, ausgebildet sind.

## Claims

1. Rotor (30) for an electric rotary machine (10), comprising:
- a rotor shaft (35) designed to be mounted so as to be able to rotate about its axis (B),
- a stack (36) of plates mounted coaxially on the rotor shaft (35), this stack (36) of plates comprising at least two radially salient poles (44),
- an excitation winding (50) wound around each pole (44) such that axial end portions (51) of the winding, termed "bundles" project axially with respect to each radially outer end face of the stack (36) of plates,
- a set of flanges (55, 56) for holding the stack (36) of plates and bundles (51) of the winding (50) which are arranged axially on either side of the stack (36) of plates,
**characterized in that** each holding flange (55, 56) comprises:
- a radial wall (59) having a main opening (60) through which the shaft (35) can pass,
- an annular rim (75) extending over the entire outer periphery of the radial wall (59) and extending axially in the direction of the rotor (30), this annular rim (75) having one face pressed against the radial outer end faces of the stack (36) of plates to hold the bundles (51) in place in spite of the centrifugal force produced by the rotation of the rotor (30) and acting on said bundles (51),
**in that** each flange (55, 56) comprises a first row of through holes (72) located about the main opening (60), these holes (72) having an opening angle at least equal to the angle between two successive salient poles (44), and **in that** each flange (55, 56) has a second row of through holes (73) outside the first row of holes (72).

2. Rotor according to Claim 1, **characterized in that** at least one hole (72) of the first row of through holes is created in the radial wall (59), so as to allow air to circulate inside the rotor (30), between the two salient poles (44).

3. Rotor according to Claim 1 or 2, **characterized in that** the size of the first row of holes (72) and/or of the second row of holes (73) differs from one flange (55, 56) to the other.

4. Rotor according to Claim 1 or 2, **characterized in that** the first row of holes (72) of one of the flanges (55, 56) is larger in circumference and radially higher than the first row of holes (72) of the other flange (55, 56).

5. Rotor according to any one of the preceding claims, **characterized in that** each flange (55, 56) has counterbores (68) affecting, radially, the outer periphery of the radial wall (59) and, axially, part of the rim (75).

6. Rotor according to any one of the preceding claims, **characterized in that** at least one of the flanges (55, 56) bears ventilation blades (70) positioned on a first face of the radial wall (59) which faces out from the rotor (30).

7. Rotor according to Claim 6, **characterized in that** the ventilation blades (70) belong to a separate fan attached to the flange (55, 56), for example by spot welding, screwing or riveting.

8. Rotor according to Claim 6, **characterized in that** the ventilation blades (70) belong to the flange (55, 56), being in one piece with this flange (55, 56).

9. Rotor according to Claim 6, **characterized in that** each hole (73) of the second row is positioned between two successive blades (70).

10. Rotor according to one of the preceding claims, **characterized in that** it further comprises two insulating elements (81, 82) which are positioned on either side of the stack (36) of plates and insulate the bundles (51).

11. Rotor according to Claim 10, **characterized in that**:
- the radial wall (59) of each flange (55, 56) has, on its inner face which faces the rotor, at least one sector (79) which extends axially toward the stack (36) of plates,
- each insulating element (81, 82) has at least one hollow part (91), into which is inserted the sector (79) of one of the flanges (55, 56).

12. Rotor according to Claim 10 or 11, **characterized in that** each insulating element (81, 82) comprises:
- a radial wall (85),
- arms (88) which extend outwards from the outer edge of the radial wall (85) and which are held pressed against a radial end face of a salient pole (44) by a bundle (51), and
- caps (89) which are located at one end of the arms (88) and which extend circumferentially on either side of the arm (88), these caps (89) being positioned between the head of the winding (50) and the annular rim (75) of a flange (55, 56) so as to help hold the bundles (51).

13. Rotor according to Claim 12, **characterized in that** one of the insulating elements (82) has slugs (95) for guiding connecting wires between the windings (50).

14. Rotor according to Claim 12 or 13, **characterized in that** the insulating elements (81, 82) comprise at least two latching devices (98) designed to engage by latching with the openings created in each radial end face of the stack of plates.

15. Rotor according to one of Claims 1 to 14, **characterized in that** each flange (55, 56) comprises at least one centring slug (77) designed to engage with the axial openings (66) created in the salient poles (44).

16. Rotor according to Claim 15, **characterized in that** each flange (55, 56) comprises at least two holes (65), it being possible for assembly rods (62), for assembling the flanges (55, 56) around the stack (36) of plates, to pass through the holes (65) of the flanges and the axial openings (66) of the poles (44).

17. Rotor according to one of Claims 1 to 16, **characterized in that** the free end of one pole (44) ends in a return (45) which is salient in the circumferential direction on either side of an arm (39) and **in that** it comprises at least one magnet (105) positioned between two returns (45) of two adjacent salient poles (44).

18. Rotor according to one of Claims 1 to 17, **characterized in that** the flanges (55, 56) are made of a non-magnetic material such as aluminium or plastic, advantageously fibre-reinforced plastic.
